# EUROPÄISCHE PATENTSCHRIFT

(11) **EP 1 688 643 B1**
(45) Veröffentlichungstag und Bekanntmachung des Hinweises auf die Patenterteilung: **13.04.2011**
(21) Anmeldenummer: 06000773.9
(22) Anmeldetag: 14.01.2006
(51) Int. Cl.: F16H 7/12

(54) **Linearspannsystem**
Linear tensioning device
Dispositif de tension linéaire

(30) Priorität: 05.02.2005 DE 102005005374
(43) Veröffentlichungstag der Anmeldung: 09.08.2006
(73) Patentinhaber: Schaeffler Technologies GmbH & Co. KG, 91074 Herzogenaurach (DE)
(72) Erfinder: Petri, Werner, 91058 Erlangen (DE)

(56) Entgegenhaltungen:
- EP-A1- 0 097 065
- EP-A1- 0 472 505
- EP-A1- 1 022 487
- EP-A1- 1 022 488
- WO-A-2005/106288
- DE-C- 390 759
- DE-C- 646 799
- GB-A- 1 279 752
- JP-A- 6 249 308
- SU-A1- 879 105
- US-A- 716 520
- US-A- 879 328
- US-A- 3 365 968

## Beschreibung

### Gebiet der Erfindung

Die Erfindung bezieht sich auf ein Linearspannsystem, das insbesondere für einen Zugmitteltrieb einer Brennkraftmaschine bestimmt ist, zur Erzielung einer ausreichenden Vorspannung des Zugmittels. Das Linearspannsystem umfasst eine ortsfest an einem Maschinenteil, vorzugsweise an dem Kurbelgehäuse der Brennkraftmaschine befestigte Schildplatte, an der ein Tragkörper verschiebbar angeordnet ist. Der mit einem Federmittel zusammenwirkende Tragkörper ist zur Aufnahme einer Spannrolle bestimmt, die im eingebauten Zustand unmittelbar an dem Zugmittel abgestützt ist.

### Hintergrund der Erfindung

Linearspannsysteme der zuvor genannten Bauart finden Anwendung in Zugmitteltrieben von Brennkraftmaschinen, mit denen verschiedene Aggregate wie beispielsweise: eine Wasserpumpe, ein Generator, ein Klimakompressor oder eine Lenkhilfspumpe angetrieben werden. Weiterhin sind derartige Linearspannsysteme für Steuertriebe einsetzbar, d. h. zum Antrieb von Nockenwellen, die zur Betätigung von Gaswechselventilen der Brennkraftmaschine vorgesehen sind.

Aus der US 6,695,730 B2 ist ein Linearspannsystem bekannt, das sowohl für einen als Kettentrieb oder auch als Riementrieb ausgelegten Zugmitteltrieb einsetzbar ist. Der Aufbau dieses Systems schließt ein in einem Gehäuse mittels einer Drehfeder verstellbaren Kolben ein, der stirnseitig aus dem Gehäuse ragt und der beispielsweise mit einer an dem Zugmittel abgestützten Spannschiene in einer Wirkverbindung steht. Dieses bekannte Linearspannsystem ermöglicht lediglich eine begrenzte Vorspannung des Zugmittels. Weiterhin verursachen von dem Zugmittel des Zugmitteltriebs resultierende Zugmittelkräfte nachteilige Querkräfte auf das bekannte Linearspannsystem.

Aus der US 3,365,968 A ist ein Linearspannsystem mit den Merkmalen des Oberbegriffs des Anspruchs 1 bekannt.

### Zusammenfassung der Erfindung

Der vorliegenden Erfindung liegt die Aufgabe zugrunde, ein Linearspannsystem zu schaffen, das einerseits eine vereinfachte Montage beinhaltet und weiterhin einen querkraftfreien Einbau sicherstellt.

Diese Problemstellung wird durch die Erfindung gemäß den Merkmalen des Anspruchs 1 gelöst. Das erfindungsgemäße Linearspannsystem ist über einen Befestigungspunkt, beispielsweise an dem Gehäuse der Brennkraftmaschine befestigt. Gleichzeitig bildet dieser Befestigungspunkt ein Schwenklager, wodurch das gesamte Linearspannsystem selbsttätig einstellbar ist. In vorteilhafter Weise ermöglicht die Erfindung beispielsweise bei einer Änderung der Wirkrichtung einer resultierenden Zugmittelkraft eine selbsttätige zwangfreie Ausrichtung. Damit unterbindet dieser Aufbau die Einleitung von Querkräften in das Linearspannsystem, was sich vorteilhaft auf die Funktion und damit die Lebensdauer des Systems auswirkt. Weiterhin stellt sich für das erfindungsgemäße Linearspannsystem eine vereinfachte Montage ein, da dieses mit nur einem Befestigungspunkt an dem Maschinenteil vorzugsweise der Brennkraftmaschine befestigt wird.

Im Unterschied zu bisherigen Lösungen, die zumindest zwei Befestigungspunkte einschließen, vermeidet die erfindungsgemäße, ein Schwenklager einschließende Einpunkt-Befestigung einen nachteiligen Schrägzug durch das Zugmittel. Durch die sich dabei einstellenden in das Linearspannsystem eingeleiteten Querkräfte wird beispielsweise die Linearführung des Spannsystems einseitig stark belastet. Folglich vergrößert sich der Verschleiß was zu einer Funktionsstörung und zu einem vollständigen Ausfall des Linearspannsystems führen kann. Aufgrund der querkraftfreien Einleitung der resultierenden Zugmittelkraft, kann mit dem erfindungsgemäßen Linearspannsystem eine vorteilhaft höhere Lebensdauer erzielt werden.

Vorteilhafte weitere Ausgestaltungen der Erfindung sind Gegenstand der abhängigen Ansprüche 2 bis 8.

In bevorzugter Weise sieht der Aufbau des Linearspannsystems gemäß der Erfindung vor, dass sich im Betriebszustand eine Lageübereinstimmung zwischen einer resultierenden Zugmittelkraft und einer Kraftrichtung des in dem Linearspannsystems integrierten Federmittels einstellt.

Das erfindungsgemäße Linearspannsystem umfasst eine Schildplatte, wobei das zugehörige Schwenklager zu der Spannrolle versetzt so angeordnet ist, dass dieses außerhalb des von dem Zugmittel umschlungenen Bereichs angeordnet ist. Diese Lage des Schwenklagers verbessert die gewünschte selbsttätige und zwangsfreie Ausrichtung des Linearspannsystems, wodurch sich im Betriebszustand eine Übereinstimmung zwischen der Kraftrichtung des in dem Spannsystem integrierten Federmittels und der resultierenden Zugmittelkraft einstellt.

Als Schwenklager für das Linearspannsystem ist bevorzugt ein Gleitlager vorgesehen. Der Aufbau dieses Gleitlagers schließt einen ortsfest, beispielsweise an dem Gehäuse der Brennkraftmaschine befestigten Lagerbolzen ein, der in eine Aufnahmebohrung der Schildplatte eingreift. Ein sich dabei einstellender kreisringförmiger Ringspalt zwischen dem Lagerbolzen und der Aufnahmebohrung ist zur Aufnahme einer Gleitlagerbuchse bestimmt, die vorzugsweise in die Aufnahmebohrung eingepresst ist. Der Lagerbolzen ist vorzugsweise mit einem Gewindeabschnitt versehen, der in eine zugehörige Gewindebohrung des Gehäuses eingeschraubt ist. Auf einen sich an den Gewindeabschnitt anschließenden zylindrischen Abschnitt ist die Gleitlagerbuchse geführt. Stirnseitig ist der Lagerbolzen bevorzugt mit einem Mehrkantprofil versehen, über das der Lagerbolzen eingeschraubt werden kann, wobei dieser gleichzeitig einen Axialanschlag für das gesamte Linearspannsystem bildet. Alternativ zu einem Lagerbolzen der zuvor beschriebenen Bauform schließt die Erfindung die Verwendung eine Maschinen- bzw. Sechskantschraube ein.

Gemäß der Erfindung ist der Tragkörper des Linearspannsystems an der Schildplatte geführt. Bevorzugt ist dazu eine formschlüssige Führung vorgesehen. Dazu eignet sich beispielsweise ein Tragkörper mit einer gabelförmigen bzw. einer u-förmigen Aufnahme, die an der entsprechenden Führungsfläche der Schildplatte geführt ist. Alternativ dazu eignet sich eine sogenannte Schwalbenschwanzführung, die ebenfalls eine wirksame, sichere Führung des Tragkörpers gegenüber der Schildplatte gewährleistet. Zur Erzielung einer unverlierbaren Führung des Tragkörpers bietet es sich an, dass beispielsweise Schenkel der gabelförmigen Aufnahme des Tragkörpers endseitig über abgewinkelte Borde mit Hinterschnitt in Führungsnuten eingreifen.

Das im Linearspannsystem eingesetzte Federmittel stützt sich bevorzugt mit einem Federende an dem Tragkörper ab und ist mit dem weiteren Federende beispielsweise an einem einstückig mit der Schildplatte verbundenen Abstützwinkel abgestützt.

Das Linearspannsystem gemäß der Erfindung ist außerdem mit einer herkömmlich gestalteten hydraulischen Spannvorrichtung kombinierbar, die als Federmittel eingesetzt ist. Dabei greift eine federbeaufschlagte Kolbenstange mit einem Ende in einen mit Hydraulikfluid gefüllten Druckraum eines an der Schildplatte positionierten Gehäuses ein. Das weitere Kolbenstangenende ist direkt mit dem Tragkörper verbunden. Bei einer Stellbewegung des Tragkörpers erfolgt ein Volumenaustausch des Hydraulikfluids zwischen dem Druckraum und einem weiteren im Gehäuse vorgesehenen Ausgleichsraum. Bei einer ersten Stellbewegung der Kolbenstange in Richtung des Druckraums wird Druckfluid über einen sich zwischen der Gehäusewandung und der Kolbenstange bildenden Leckspalt in den Ausgleichsraum verdrängt. Bei einer umgekehrten Kolbenstangenbewegung, bei der der Tragkörper in Richtung einer erhöhten Vorspannung des Zugmittels verstellt wird, kann Hydraulikfluid von dem Ausgleichsraum in den Druckraum über ein zwischen den beiden Hydraulikräumen vorgesehenes Einwegventil nachströmen.

Als Maßnahme, die Montage des Zugmittels zu vereinfachen, umfasst das erfindungsgemäße Linearspannsystem weiterhin eine Fixierung des Tragkörpers gegenüber der Schildplatte. Dabei bietet es sich beispielsweise an, in einen einstückig mit dem Tragkörper verbundenen Butzen eine Bohrung einzubringen, die zur Aufnahme eines Fixierstiftes vorgesehen ist. In einer Endlage des Linearspannsystems kann der Fixierstift in eine weitere korrespondierende Bohrung der Schildplatte eingeführt werden. Diese Endlagenfixierung bei gespanntem Linearspannsystem ermöglicht eine vereinfachte Montage des Zugmittels, das nach Entfernen des Fixierstiftes vorgespannt wird.

### Kurze Beschreibung der Zeichnungen

Die Erfindung wird anhand zweier Zeichnungen dargestellt, die nachfolgend näher erläutert werden. Es zeigen:
- Figur 1: in einer Vorderansicht ein erfindungsgemäßes Linearspannsystem;
- Figur 2: den Aufbau eines Linearspannsystems in einer Seitenansicht mit einem zu Figur 1 abweichend ausgebildeten Federmittel.

### Ausführliche Beschreibung der Zeichnungen

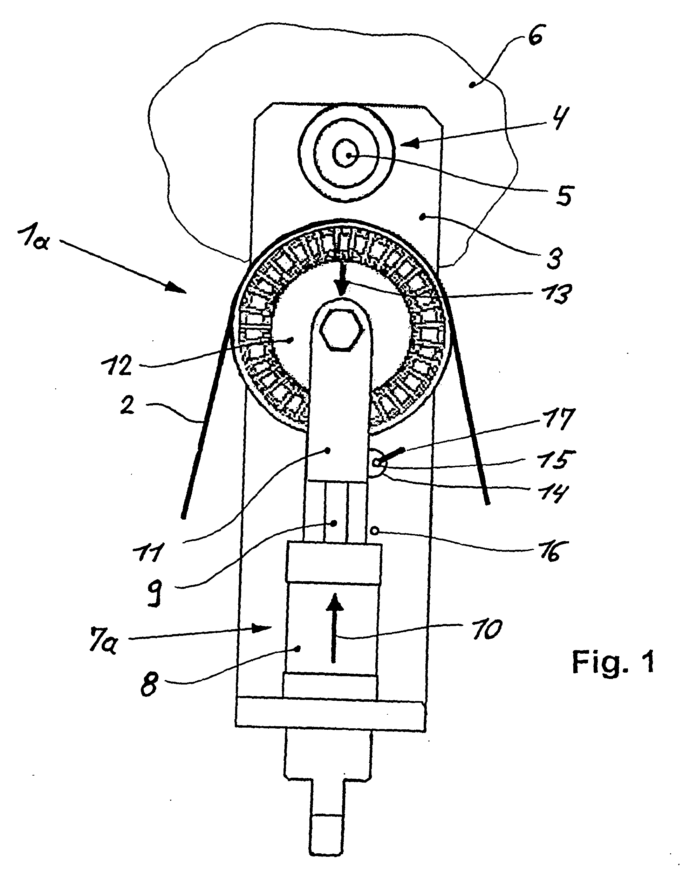

Die Figur 1 zeigt ein Linearspannsystem 1 a in einem eingebauten Zustand, das Teil eines Zugmitteltriebs ist, von dem ein Zugmittel 2 abgebildet ist. Das Linearspannsystem 1 a umfasst eine Schildplatte 3, die über nur einen Befestigungspunkt 4, ausgebildet als ein Schwenklager 5, verschwenkbar ist. Damit ist das Linearspannsystem 1 a gegenüber einem ortsfesten Maschinenteil 6, beispielsweise einem Kurbelgehäuse einer Brennkraftmaschine, einstellbar befestigt. An dem vom Schwenklager 5 abgewandten Ende ist der Schildplatte 3 ein Federmittel 7a zugeordnet, welches über ein Gehäuse 8 ortsfest mit der Schildplatte 3 verbunden ist. Als Federmittel 7a dient ein herkömmlich aufgebautes hydraulische Spannelement, das eine Kolbenstange 9 einschließt, welche von einer in Figur 1 nicht dargestellten Feder, insbesondere einer Druckfeder, in Pfeilrichtung des Pfeils 10 kraftbeaufschlagt wird.

Die Kolbenstange 9 ist dabei mit einem Ende im Bereich des Gehäuses 8 in einem mit Hydraulikfluid gefüllten Druckraum eingesetzt. Eine Stellbewegung der Kolbenstange 9 bewirkt einen Volumenaustausch zwischen dem Druckraum und dem ebenfalls in dem Gehäuse 8 des Federmittels 7a integrierten Ausgleichsraum. Bei einer Stellbewegung in Richtung des Pfeils 10 wird Hydraulikfluid von dem Vorratsraum über ein Einwegventil in den Druckraum geleitet. Bei einer Umkehrung der Stellbewegung kann Hydraulikfluid über einen Leckspalt, der sich zwischen der Kolbenstange und dem zugehörigen Zylinder einstellt in den Vorratsraum gelangen, wodurch eine Dämpfungsarbeit erzeugt wird. Die Kolbenstange 9 steht mit einem Tragkörper 11 in Verbindung, der zur Aufnahme einer Spannrolle 12 bestimmt ist. Die drehbar in dem Tragkörper 11 positionierte Spannrolle 12 ist an dem Zugmittel 2 abgestützt, das die Spannrolle teilweise umschließt.

Durch das schwenkbar angeordnete Linearspannsystem 1 a, welches mit nur einem Befestigungspunkt 4 an dem Maschinenteil 6 befestigt ist, richtet sich das Linearspannsystem 1 a und die damit in Verbindung stehende Spannrolle 12 selbsttätig in Übereinstimmung mit einer Wirkrichtung der resultierenden Kraft des Zugmittels 2, gekennzeichnet durch den Pfeil 13, selbsttätig und zwangfrei aus. Durch diese Anbindung des Linearspannsystems 1a an dem Maschinenteil 6 wirken keinerlei Querkräfte auf das Linearspannsystem 1 a, was sich vorteilhaft auf die Funktion und damit die Lebensdauer des gesamten Linearspannsystems 1 a auswirkt. Zur Montagevereinfachung des Zugmittels 2 ist der Tragkörper 11 mit einem seitlichen Butzen 14 versehen, welcher eine Querbohrung 15 aufweist. In einer Endlage, bei der sich der Tragkörper 11 an dem Gehäuse 8 abstützt, korrespondiert die Querbohrung 15 mit einer Bohrung 16 in der Schildplatte 3. Mit Hilfe eines Sicherungsstiftes 17 ist der Tragkörper 11 in dieser Position fixierbar, wodurch eine einfache Montage des Zugmittels 2 ermöglicht wird. Nach Entfernen des Sicherungsstiftes 17 wird der Tragkörper 11 in Verbindung mit der Spannrolle 12 bedingt durch das Federmittel 7a in Richtung des Pfeils 10 verschoben, wodurch das Zugmittel 2 vorgespannt wird.

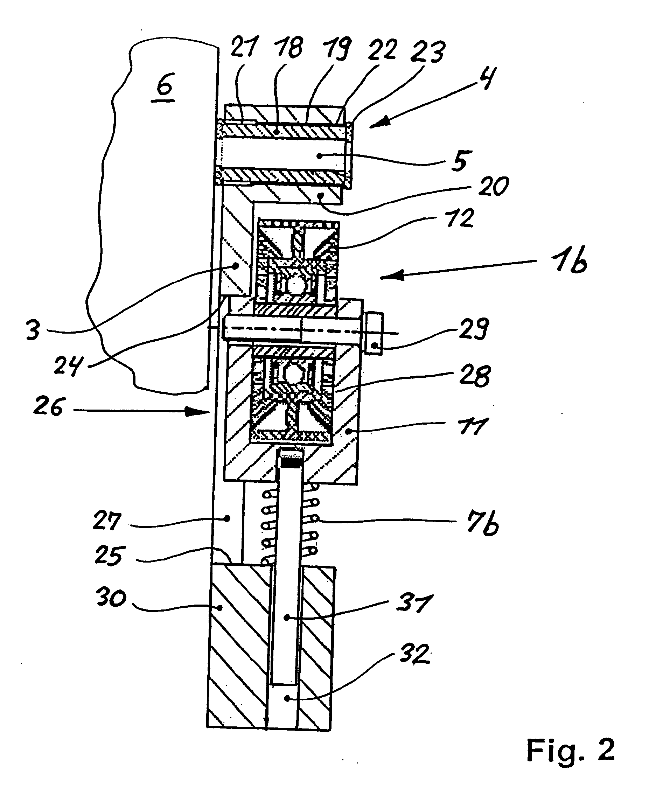

In der Figur 2 ist das Linearspannsystem 1b in einer Seitenansicht abgebildet. Diese Ansicht verdeutlicht den Aufbau einzelner Bauteile. Das Schwenklager 5 wird gebildet durch einen ortsfest an dem Maschinenteil 6 befestigten Lagerbolzen 18, der in eine Aufnahmebohrung 19 einer einstückig mit der Schildplatte 3 verbundenen Buchse 20 eingreift. Ein sich zwischen dem Lagerbolzen 18 und der Aufnahmebohrung 19 einstellender Ringspalt 21 dient zur Aufnahme einer Gleitlagerbuchse 22. Zur Bildung eines Axialanschlages und zur Befestigung des Lagerbolzens 18 ist dieser stirnseitig mit einem Mehrkantprofil 23 versehen.

Der zwischen dem Anschlag 24 der Schildplatte 3 und dem Anschlag 25 des Abstützwinkels 30 verschiebbare Tragkörper 11 ist mittels einer formschlüssigen Führung 26 an der Schildplatte 3 geführt. Als Führung 26 dient vorzugsweise eine seitlich in den Tragkörper 11 eingebrachte u-förmige Nut, in die ein Zwischenglied 27 der Schildplatte 3 begrenzt eingreift. Zur Erzielung einer verbesserten Führung bietet es sich an, dass Bereiche des Tragkörpers 11 oder des Zwischenglieds 27 mittels eines Hinterschnittes in das zugehörige benachbarte Bauteil eingreifen.

Die Spannrolle 12 ist in einer U-förmigen Aufnahme 28 des Tragkörpers 11 eingesetzt und mittels einer Befestigungsschraube 29 positioniert. Das Federmittel 7b, mit dem der Tragkörper 11 in Richtung des Pfeils 10 beaufschlagt wird, bildet eine schraubenförmig gestaltete Druckfeder. Diese stützt sich mit einem ersten Federende stirnseitig an dem Tragkörper 11 ab und mit dem weiteren Ende an einem Abstützwinkel 30 der Schildplatte 3. Eine ortsfest an dem Tragkörper 11 befestigte Führungsstange 31, die gegenüberliegend in einer Bohrung 32 des Abstützwinkels 30 eingreift, verbessert einerseits die Führung des Tragkörpers 11 und andererseits die des Federmittels 7b.

### Bezugszahlen

- 1 a: Linearspannsystem
- 1 b: Linearspannsystem
- 2: Zugmittel
- 3: Schildplatte
- 4: Befestigungspunkt
- 5: Schwenklager
- 6: Maschinenteil
- 7a: Federmittel
- 7b: Federmittel
- 8: Gehäuse
- 9: Kolbenstange
- 10: Pfeil
- 11: Tragkörper
- 12: Spannrolle
- 13: Pfeil
- 14: Butzen
- 15: Querbohrung
- 16: Bohrung
- 17: Sicherungsstift
- 18: Lagerbolzen
- 19: Aufnahmebohrung
- 20: Buchse
- 21: Ringspalt
- 22: Gleitlagerbuchse
- 23: Mehrkantprofil
- 24: Anschlag
- 25: Anschlag
- 26: Führung
- 27: Zwischenglied
- 28: Aufnahme
- 29: Befestigungsschraube
- 30: Abstützwinkel
- 31: Führungsstange
- 32: Bohrung

## Patentansprüche

1. Linearspannsystem eines Zugmitteltriebs, bestimmt für eine Brennkraftmaschine, mit dem ein Zugmittel (2) vorgespannt wird, umfassend eine ortsfest an einem Maschinenteil (6), vorzugsweise an einem Gehäuse der Brennkraftmaschine befestigte Schildplatte (3), der ein federkraftbeaufschlagter, verschiebbarer Tragkörper (11) zugeordnet ist, welcher zur Aufnahme einer an dem Zugmittel (2) geführten Spannrolle (12) bestimmt ist, und für das Linearspannsystem (1a, 1b) ein Befestigungspunkt (4) vorgesehen ist, der gleichzeitig ein Schwenklager (5) bildet, über das sich das Linearspannsystem (1a, 1b) im Betriebszustand selbsttätig querkraftfrei einstellt, **dadurch gekennzeichnet, dass** im Betriebszustand ein Federmittel (7a, 7b) die Spannrolle (12) in Verbindung mit dem Tragkörper (11) in Richtung des Schwenklagers (5) beaufschlagt, wobei das auf Zug belastete Schwenklager (5) außerhalb des von dem Zugmittel (2) umschlungenen Bereichs und versetzt zu der Spannrolle (12) an der Schildplatte (3) positioniert ist und der Tragkörper (11) einschließlich der Spannrolle (12) zwischen einem Anschlag (24) der Schildplatte (3) und einem Anschlag (25) eines Abstützwintels (30) der Schildplatte (3) verschiebbar ist.

2. Linearspannsystem nach Anspruch 1, das ermöglicht, das im Betriebszustand eine Kraftrichtung eine dem Tragkörper 11 durch beaufschlagenden Federmittels (7 a, 7b) mit der resultierenden Kraft des Zugmittels (2) übereinstimmt.

3. Linearspannsystem nach Anspruch 1, wobei das Schwenklager (5) als ein Gleitlager ausgebildet ist.

4. Linearspannsystem nach Anspruch 3, dessen Schwenklager (5) einen ortsfesten Lagerbolzen (18) einschließt, der in eine Aufnahmebohrung (19) der Schildplatte (3) eingreift, wobei in einem sich zwischen dem Lagerbolzen (18) und dem Aufnahmebohrung (19) bildenden Ringspalt (21) eine Gleitlagerbuchse (22) eingesetzt ist.

5. Linearspannsystem nach Anspruch 1, bei dem der Tragkörper (11) mittels einer formschlüssigen Führung (26) an der Schildplatte (3) geführt ist.

6. Linearspannsystem nach Anspruch 1, wobei das Federmittel (7b) mit einem Federende an dem Tragkörper (11) und mit einem weiteren Federende über einen Abstützwinkel (30) an der Schildplatte (3) abgestützt ist.

7. Linearspannsystem nach Anspruch 1, bei dem als Federmittel (7a) eine hydraulische Spannvorrichtung eingesetzt ist, deren federkraftbeaufschlagte Kolbenstange (9) an einem Ende einen mit einem Hydraulikfluid gefüllten Druckraum eines an der Schildplatte (3) positionierten, weiterhin einen Ausgleichsraum einschließenden Gehäuse (8) begrenzt, und das weitere Kolbenstangenende mit dem Tragkörper (11) verbunden ist.

8. Linearspannsystem nach Anspruch 1, bei dem der Tragkörper (11) in einer Endlage gegenüber der Schildplatte (3) fixiert werden kann.

## Claims

1. Linear tensioning system of a traction mechanism drive, designed for an internal combustion engine, by means of which linear tensioning system a traction mechanism (2) is pretensioned, comprising a shield plate (3) which is fastened in a positionally fixed manner to a machine part (6), preferably to a housing of the internal combustion engine, and which is assigned a spring-loaded movable support body (11) designed for holding a tensioning roller (12) which is guided on the traction mechanism (2), and a fastening point (4) is provided for the linear tensioning system (1a, 1b), which fastening point simultaneously forms a pivot bearing (5) by means of which the linear tensioning system (1a, 1b) automatically adjusts itself during operation so as to be free from transverse forces, **characterized in that**, during operation, a spring means (7a, 7b) loads the tensioning roller (12) in conjunction with the support body (11) in the direction of the pivot bearing (5), with the pivot bearing (5), loaded under tension, being positioned on the shield plate (3) outside the region enclosed by the traction mechanism (2) and offset with respect to the tensioning roller (12), and with the support body (11) including the tensioning roller (12) being movable between a stop (24) of the shield plate (3) and a stop (25) of a support bracket (30) of the shield plate (3).

2. Linear tensioning system according to Claim 1, which makes it possible, during operation, for a force direction of a spring means (7a, 7b) which loads the support body (11) to coincide with the resultant force of the traction mechanism (2).

3. Linear tensioning system according to Claim 1, with the pivot bearing (5) being designed as a plain bearing.

4. Linear tensioning system according to Claim 3, the pivot bearing (5) of which includes a positionally fixed bearing journal (18) which engages into a receiving bore (19) of the shield plate (3), with a plain bearing bush (22) being inserted in an annular gap (21) formed between the bearing journal (18) and the receiving bore (19).

5. Linear tensioning system according to Claim 1, in which the support body (11) is guided on the shield plate (3) by means of a positively locking guide (26).

6. Linear tensioning system according to Claim 1, with the spring means (7b) being supported with one spring end on the support body (11) and with a further spring end on the shield plate (3) via a support bracket (30).

7. Linear tensioning system according to Claim 1, in which, as spring means (7a), use is made of a hydraulic tensioning device whose spring-loaded piston rod (9) delimits, at one end, a hydraulic-fluid-filled pressure chamber of a housing (8) which is positioned on the shield plate (3) and which also encloses a compensating chamber, and the further piston rod end is connected to the support body (11).

8. Linear tensioning system according to Claim 1, in which the support body (11) can be fixed with respect to the shield plate (3) in one end position.

## Revendications

1. Système de tensionnement linéaire d'un entraînement à moyen de traction, prévu pour un moteur à combustion interne, avec lequel un moyen de traction (2) est précontraint, comprenant une plaque d'écran (3) attachée fixement à une partie de machine (6), de préférence à un boîtier du moteur à combustion interne, qui est associée à un corps porteur (11) déplaçable, sollicité par la force d'un ressort, qui est prévu pour recevoir un galet tendeur (12) guidé sur le moyen de traction (2), et un point de fixation (4) étant prévu pour le système de tensionnement linéaire (1a, 1b), lequel forme en même temps un palier pivotant (5) par le biais duquel le système de tensionnement linéaire (1a, 1b) s'ajuste automatiquement sans force transversale dans l'état de fonctionnement, **caractérisé en ce que** dans l'état de fonctionnement, un moyen de ressort (7a, 7b) sollicite le galet tendeur (12) en liaison avec le corps porteur (11) dans la direction du palier pivotant (5), le palier pivotant (5) sollicité en traction étant positionné en dehors de la région entourée par le moyen de traction (2) et de manière décalée par rapport au galet tendeur (12) sur la plaque d'écran (3), et le corps porteur (11), conjointement avec le galet tendeur (12), pouvant être déplacé entre une butée (24) de la plaque d'écran (3) et une butée (25) d'un coin de support (30) de la plaque d'écran (3).

2. Système de tensionnement linéaire selon la revendication 1, permettant que dans l'état de fonctionnement, une direction de force d'un moyen de ressort (7a, 7b) sollicitant le corps porteur (11) coïncide avec la force résultante du moyen de traction (2).

3. Système de tensionnement linéaire selon la revendication 1, dans lequel le palier pivotant (5) est réalisé sous forme de palier lisse.

4. Système de tensionnement linéaire selon la revendication 3, dont le palier pivotant (5) inclut un boulon de palier fixe (18), qui vient en prise dans un alésage de réception (19) de la plaque d'écran (3), une douille de palier lisse (22) étant insérée dans une fente annulaire (21) se formant entre le boulon de palier (18) et l'alésage de réception (19).

5. Système de tensionnement linéaire selon la revendication 1, dans lequel le corps porteur (11) est guidé au moyen d'un guide à engagement positif (26) contre la plaque d'écran (3).

6. Système de tensionnement linéaire selon la revendication 1, dans lequel le moyen de ressort (7b) est supporté par une extrémité de ressort sur le corps porteur (11) et par une autre extrémité de ressort par le biais d'un coin de support (30) contre la plaque d'écran (3).

7. Système de tensionnement linéaire selon la revendication 1, dans lequel on utilise comme moyen de ressort (7a) un dispositif de tensionnement hydraulique dont la tige de piston (9) sollicitée par la force de ressort limite à une extrémité un espace de pression rempli de fluide hydraulique d'un boîtier (8) positionné sur la plaque d'écran (3) et incluant en outre un espace de compensation, et l'autre extrémité de la tige de piston est connectée au corps porteur (11).

8. Système de tensionnement linéaire selon la revendication 1, dans lequel le corps porteur (11) peut être fixé dans une position d'extrémité par rapport à la plaque d'écran (3).
